(19) Europäisches Patentamt
European Patent Office
Office européen des brevets

(11) **EP 4 144 702 A1**

(12) **EUROPEAN PATENT APPLICATION**
published in accordance with Art. 153(4) EPC

(43) Date of publication:
**08.03.2023 Bulletin 2023/10**

(21) Application number: **21797331.2**

(22) Date of filing: **20.04.2021**

(51) International Patent Classification (IPC):
$C01G\ 45/00$ (2006.01)    $C01G\ 51/00$ (2006.01)
$C01G\ 53/00$ (2006.01)    $H01M\ 4/36$ (2006.01)
$H01M\ 4/505$ (2010.01)    $H01M\ 4/525$ (2010.01)

(52) Cooperative Patent Classification (CPC):
**C01G 45/00; C01G 51/00; C01G 53/00; H01M 4/36;
H01M 4/505; H01M 4/525;** Y02E 60/10

(86) International application number:
**PCT/JP2021/015955**

(87) International publication number:
**WO 2021/220875 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2020 JP 2020078228**

(71) Applicant: **Panasonic Intellectual Property
Management Co., Ltd.
Osaka-shi, Osaka 540-6207 (JP)**

(72) Inventors:
• **KAWADA Hiroshi
Chuo-ku, Osaka-shi, Osaka 540-6207 (JP)**
• **MURATA Akiko
Chuo-ku, Osaka-shi, Osaka 540-6207 (JP)**
• **HIBINO Mitsuhiro
Chuo-ku, Osaka-shi, Osaka 540-6207 (JP)**

(74) Representative: **Novagraaf International SA
Chemin de l'Echo 3
1213 Onex, Geneva (CH)**

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57) This positive electrode active material for non-aqueous electrolyte secondary batteries comprises: a lithium transition metal composite oxide which is represented by general formula $Li_xM1_{2-y}M2_yM3_zO_wF_v$ (wherein $1 \le x \le 1.2$, $0 < y < 1$, $0.001 \le z \le 0.1$, $0 \le v \le 0.2$, $3.8 \le w + v \le 4.2$, M1 represents one or more elements selected from the group consisting of Ni, Co and Mn, M2 represents one or more elements selected from the group consisting of Ti, Fe, Al, Ge and Si, and M3 represents one or more elements selected from the group consisting of Ca and Sr), while containing M1 and M2; and a coating layer which is formed on at least a part of the surface of the lithium transition metal composite oxide, while containing M2 and M3.

Figure 1

**Description**

TECHNICAL FIELD

The present disclosure generally relates to a positive electrode active material for a non-aqueous electrolyte secondary battery and to a non-aqueous electrolyte secondary battery using the positive electrode active material.

BACKGROUND ART

Due to charge and discharge, transition metals such as Ni and Mn may be eluted from a positive electrode active material included in a positive electrode of a secondary battery. This elution destabilizes a crystalline structure of the positive electrode active material, and adversely affects battery characteristics such as a battery capacity. This tendency is particularly significant with a battery using a positive electrode active material with a high energy density. Patent Literature 1 discloses a positive electrode active material in which a surface of a lithium-transition metal composite oxide is coated with a coating layer of an oxide of a metal element such as Sr.

CITATION LIST

PATENT LITERATURE

PATENT LITERATURE 1: Japanese Unexamined Patent Application Publication No. 2012-138197

SUMMARY

From the positive electrode active material disclosed in Patent Literature 1, Ca or Sr may be eluted when the coating layer contains these elements. On the positive electrode active material disclosed in Patent Literature 1, stability of the coating layer has not been investigated, and there is still room for improvement.

A positive electrode active material for a non-aqueous electrolyte secondary battery of an aspect of the present disclosure is represented by the general formula $Li_xM1_{2-y}M2_yM3_zO_wF_v$, wherein $1 \leq x \leq 1.2$, $0 < y < 1$, $0.001 \leq z < 0.1$, $0 \leq v \leq 0.2$, $3.8 \leq w+v \leq 4.2$, M1 represents one or more elements selected from the group consisting of Ni, Co, and Mn, M2 represents one or more elements selected from the group consisting of Ti, Fe, Al, Ge, and Si, and M3 represents one or more elements selected from the group consisting of Ca and Sr, and the positive electrode active material includes: a lithium-transition metal composite oxide containing M1 and M2; and a coating layer formed on at least a part of a surface of the lithium-transition metal composite oxide and containing M2 and M3.

A non-aqueous electrolyte secondary battery of an aspect of the present disclosure comprises: a positive electrode including the positive electrode active material for a non-aqueous electrolyte secondary battery; a negative electrode; and a non-aqueous electrolyte.

According to an aspect of the present disclosure, the elution of the transition metals from the lithium-transition metal composite oxide and the elution of Ca and Sr from the coating layer formed on the surface thereof may be inhibited.

BRIEF DESCRIPTION OF DRAWINGS

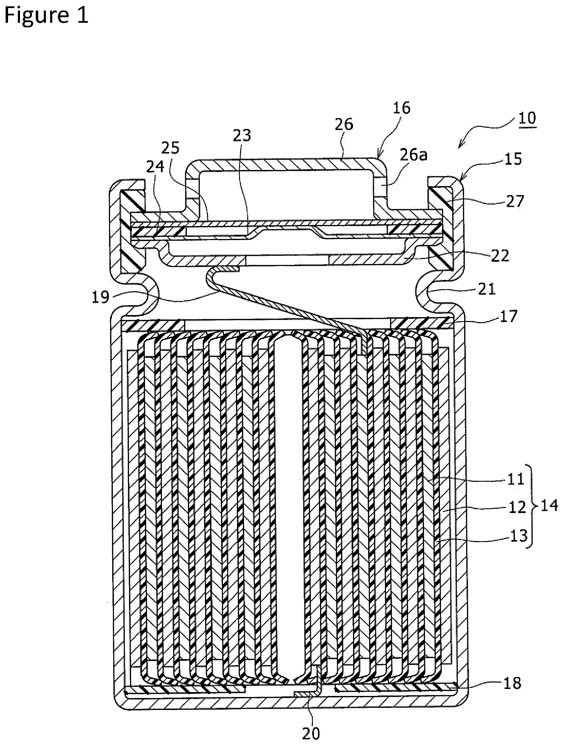

FIG. 1 is a longitudinal sectional view of a cylindrical secondary battery of an example of an embodiment.

DESCRIPTION OF EMBODIMENTS

Investigation by the present inventors have found that Ca or Sr may be eluted from the coating layer including these elements. The present inventors have intensively investigated the above problem, and as a result, have found that both of a lithium-transition metal composite oxide and a coating layer containing a predetermined metal element, such as Ti, may inhibit both of the elution of the transition metals derived from the lithium-transition metal composite oxide and the elution of Ca and Sr derived from the coating layer. It is presumed that the presence of the coating layer inhibits the elution of the transition metals derived from the lithium-transition metal composite oxide, and the coating layer containing the metal element in common with the lithium-transition metal composite oxide, such as Ti, allows Ca or Sr included in the coating layer to constitute a highly stable compound with this common element, resulting in increase in the stability of the coating layer to inhibit the elution of these elements.

Hereinafter, an example of an embodiment of a non-aqueous electrolyte secondary battery according to the present disclosure will be described in detail. Hereinafter, a cylindrical battery housing a wound electrode assembly in a cylindrical battery case will be exemplified, but the electrode assembly is not limited to the wound electrode assembly, and may be a stacked electrode assembly in which a plurality of positive electrodes and a plurality of negative electrodes are alternately stacked with a separator interposed therebetween. A shape of the battery case is not limited to be cylindrical shape, and may be, for example, a rectangular shape, a coin shape, or the like, and may be a battery case constituted of laminated sheets including a metal layer and a resin layer.

FIG. 1 is an axial sectional view of a cylindrical secondary battery 10 of an example of an embodiment. In the secondary battery 10 illustrated in FIG. 1, an electrode assembly 14 and a non-aqueous electrolyte are housed in an exterior housing body 15. The electrode assembly 14 has a wound structure in which a positive electrode 11 and a negative electrode 12 are wound with a separator 13 interposed therebetween. For a non-aqueous solvent (organic solvent) of the non-aqueous electrolyte, carbonates, lactones, ethers, ketones, esters, and the like may be used, and two or more of these solvents may be mixed to be used. When two or more of the solvents are mixed to be used, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. For an electrolyte salt of the non-aqueous electrolyte, $LiPF_6$, $LiBF_4$, $LiCFsSOs$, and the like, and a mixture thereof may be used. An amount of the electrolyte salt dissolved in the non-aqueous solvent may be, for example, 0.5 to 2.0 mol/L. Hereinafter, for convenience of description, the sealing assembly 16 side will be described as the "upper side", and the bottom side of the exterior housing body 15 will be described as the "lower side".

An opening end part of the exterior housing body 15 is capped with the sealing assembly 16 to seal inside the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. A negative electrode lead 20 extends through a through hole of the insulating plate 18 toward the bottom side of the exterior housing body 15, and is welded to a bottom inner face of the exterior housing body 15. In the secondary battery 10, the exterior housing body 15 becomes a negative electrode terminal. The negative electrode lead 20 may extend through an outside of the insulating plate 18 toward the bottom side of the exterior housing body 15 to be welded to the bottom inner face of the exterior housing body 15.

The exterior housing body 15 is, for example, a bottomed cylindrical metallic exterior housing can. A gasket 27 is provided between the exterior housing body 15 and the sealing assembly 16 to achieve sealability inside the secondary battery 10. The exterior housing body 15 has a grooved part 21 formed by, for example, pressing the side part thereof from the outside to support the sealing assembly 16. The grooved part 21 is preferably formed in a circular shape along a circumferential direction of the exterior housing body 15, and supports the sealing assembly 16 with the gasket 27 interposed therebetween and with the upper face of the grooved part 21.

The sealing assembly 16 has the filter 22, a lower vent member 23, an insulating member 24, an upper vent member 25, and the cap 26 which are stacked in this order from the electrode assembly 14 side. Each member constituting the sealing assembly 16 has, for example, a disk shape or a ring shape, and each member except for the insulating member 24 is electrically connected each other. The lower vent member 23 and the upper vent member 25 are connected each other at each of central parts thereof, and the insulating member 24 is interposed between each of the circumferential parts of the vent members 23 and 25. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both the members. If the internal pressure further increases, the upper vent member 25 breaks, and gas is discharged through an opening 26a of the cap 26.

Hereinafter, the positive electrode 11, negative electrode 12, and separator 13, which constitute the secondary battery 10, particularly the positive electrode active material included in a positive electrode mixture layer constituting the positive electrode 11 will be described in detail.

[Positive Electrode]

The positive electrode 11 has, for example, a positive electrode current collector such as a metal foil and a positive electrode mixture layer formed on the positive electrode current collector. For the positive electrode current collector, a foil of a metal stable within a potential range of the positive electrode, such as aluminum, a film in which such a metal is disposed on a surface layer thereof, and the like may be used. The positive electrode mixture layer includes, for example, a positive electrode active material, a binder, a conductive agent, and the like. The positive electrode may be produced by, for example, applying a positive electrode mixture slurry including the positive electrode active material, the binder, the conductive agent, and the like on the positive electrode current collector and drying to form the positive electrode mixture layer, and then rolling this positive electrode mixture layer.

Examples of the conductive agent included in the positive electrode mixture layer may include carbon-based particles such as carbon black (CB), acetylene black (AB), Ketjenblack, and graphite. These materials may be used singly, or may be used in combination of two or more thereof.

Examples of the binder included in the positive electrode mixture layer may include fluororesins such as polytetrafluoroethylene (PTFE) and polyvinylidene fluoride (PVdF), polyacrylonitrile (PAN), a polyimide resin, an acrylic resin, and a polyolefin resin. These materials may be used singly, or may be used in combination of two or more thereof.

The positive electrode active material is represented by the general formula $Li_xM1_{2-y}M2_yM3_zO_wF_v$, wherein $1 \leq x \leq 1.2$, $0 < y < 1$, $0.001 \leq z < 0.1$, $0 \leq v \leq 0.2$, $3.8 \leq w+v \leq 4.2$, M1 represents one or more elements selected from the group consisting of Ni, Co, and Mn, M2 represents one or more elements selected from the group consisting of Ti, Fe, Al, Ge, and Si, and M3 represents one or more elements selected from the group consisting of Ca and Sr. On a mole fraction of each element constituting the positive electrode active material, for example, elements excluding F may be measured by inductively coupled plasma (ICP) atomic emission spectroscopic analysis, and F may be measured by ion chromatograph (IC) measurement.

The positive electrode active material includes: a lithium-transition metal composite oxide containing M1 and M2; and a coating layer formed on at least a part of a surface of the lithium-transition metal composite oxide and containing M2 and M3. Both of the lithium-transition metal composite oxide and the coating layer containing M2 may inhibit both of the elution of M1 in the lithium-transition metal composite oxide and the elution of M3 in the coating layer. Hereinafter, for convenience of description, the above lithium-transition metal composite oxide having the coating layer is referred to as "composite oxide (Z)". The positive electrode active material is mainly composed of the composite oxide (Z), and may be composed of substantially only the composite oxide (Z). The positive electrode active material may include a composite oxide other than the composite oxide (Z) or another compound within a range in that an object of the present disclosure is not impaired.

The lithium-transition metal composite oxide constituting the composite oxide (Z) may have a spinel structure. The spinel structure of the lithium-transition metal composite oxide may be confirmed by X-ray diffraction method (XRD).

The lithium-transition metal composite oxide contains M2, and may be represented by the general formula $Li_aNi_{0.5-b}Mn_{1.5-c}M2_{b+c}O_dF_e$, wherein $1 \leq a \leq 1.2$, $0 \leq b < 0.2$, $0 \leq c < 0.5$, $b+c > 0$, $0 \leq e \leq 0.2$, and $3.8 \leq d+e \leq 4.2$. On a mole fraction of each element constituting the lithium-transition metal composite oxide, for example, elements excluding F may be measured by ICP atomic emission spectroscopic analysis, and F may be measured by IC measurement.

The above a, which indicates a rate of Li in the lithium-transition metal composite oxide, satisfies $1 < a \leq 1.2$, and preferably satisfies $1 \leq a \leq 1.05$. If a is less than 1, the battery capacity is lowered in some cases compared with the case where a satisfies the above range. If a is more than 1.2, the charge-discharge cycle characteristics are lowered in some cases compared with the case where a satisfies the above range.

The above b in 0.5-b, which indicates a rate of Ni to the total number of moles of metal elements excluding Li in the lithium-transition metal composite oxide, satisfies $0 \leq b < 0.2$, preferably satisfies $0 \leq b \leq 0.15$, and more preferably satisfies $0 \leq b \leq 0.1$.

The above c in 1.5-c, which indicates a rate of Mn to the total number of moles of metal elements excluding Li in the lithium-transition metal composite oxide, satisfies $0 \leq c < 0.5$, preferably satisfies $0 \leq c \leq 0.3$, and more preferably satisfies $0 \leq c \leq 0.1$. With Mn, $Mn^{3+}$ near the surface of the lithium-transition metal composite oxide causes disproportionation for forming $Mn^{2+}$ to be likely to be eluted. This disproportionation destabilizes the surface structure of the lithium-transition metal composite oxide and precipitates the eluted $Mn^{2+}$ on the negative electrode, resulting in a lowered battery capacity. The elution of Mn may be inhibited by coating the surface of the lithium-transition metal composite oxide with the coating layer, described later.

The above b+c, which indicates a rate of M2 (M2 is one or more elements selected from the group consisting of Ti, Fe, Al, Ge, and Si) to the total number of moles of metal elements excluding Li in the lithium-transition metal composite oxide, satisfies $b+c > 0$, preferably satisfies $0 < b+c < 0.7$, and more preferably satisfies $0 < b+c \leq 0.5$. Although M2 is an essential component, if b+c is 0.7 or more, amounts of Ni and Mn decrease to lower the battery capacity.

The above e, which indicates a rate of F in the lithium-transition metal composite oxide, satisfies $0 \leq e \leq 0.2$, and preferably satisfies $0 \leq e \leq 0.1$. Containing F in the lithium-transition metal composite oxide improves stability of a crystalline structure of the lithium-transition metal composite oxide. Stabilizing the crystalline structure of the lithium-transition metal composite oxide improves, for example, the durability of the secondary battery.

The lithium-transition metal composite oxide is, for example, a secondary particle formed by aggregation of primary particles. The particle diameter of the primary particles constituting the secondary particle is, for example, 0.05 $\mu$m to 1 $\mu$m. The particle diameter of the primary particles is measured as a diameter of a circumscribed circle in a particle image observed with a scanning electron microscope (SEM).

A median diameter (D50) on a volumetric basis of the secondary particles of the lithium-transition metal composite oxide is, for example, 3 $\mu$m to 30 $\mu$m, preferably 5 $\mu$m to 25 $\mu$m, and particularly preferably 7 $\mu$m to 15 $\mu$m. The D50, also referred to as a median diameter, means a particle diameter at which a cumulative frequency is 50% from a smaller particle diameter side in a particle size distribution on a volumetric basis. The particle size distribution of the lithium-transition metal composite oxide may be measured by using a laser diffraction-type particle size distribution measuring device (for example, MT3000II, manufactured by MicrotracBEL Corp.) with water as a dispersion medium.

The coating layer constituting the composite oxide (Z) contains M2 and M3, and may include a compound represented by the general formula $M3_\alpha M2_{1-\alpha}O_\beta$, wherein $0 < \alpha < 1$ and $1 \le \beta \le 2$. With this compound, the coating layer, which contains M2 being a common element with the lithium-transition metal composite oxide, allows M3 and M2 to constitute a highly stable compound, and the elution of M3 may be inhibited.

The coating layer may include one or more composite oxides selected from the group consisting of $CaTiO_3$, $SrTiO_3$, $CaAl_2O_4$, $SrAl_2O_4$, $SrFe_{12}O_{19}$, $CaGeO_3$, $SrGeO_3$, $Ca_2SiO_4$, $Sr_2SiO_4$, $Ca_3SiO_5$, $Sr_3SiO_5$, $Ca_3Al_2O_6$, $Sr_3Al_2O_6$, $Ca_4Al_2Fe_2O_9$, and $Sr_4Al_2Fe_2O_9$.

A mole fraction of M3 contained in the coating layer to the total number of moles of metal elements excluding Li contained in the lithium-transition metal composite oxide may be, for example, 0.0005 to 0.05. A mole fraction of each element constituting the coating layer may be measured by composition analysis with X-ray diffraction method (XRD) or ICP atomic emission spectroscopic analysis.

The coating layer may be formed so as to cover an entire surface of the lithium-transition metal composite oxide, and may be scattered on the surface of the lithium-transition metal composite oxide. A thickness of the coating layer on the surface of the lithium-transition metal composite oxide may be, for example, 0.1 nm to 0.1 $\mu$m. The presence state of the coating layer and the thickness of the coating layer may be confirmed by SEM observation.

The composite oxide (Z) may be produced by, for example, the following procedure.

(1) Into a composite compound (X) containing no Li, a Li source such as LiF, $Li_2CO_3$, and LiOH is added for calcining to synthesize a lithium composite oxide (Y). Examples of the composite compound (X) may include composite oxides and hydroxides containing Ni and Mn.

(2) Into the lithium composite oxide (Y), a compound containing M2 and M3 (hereinafter, referred to as M2-M3 source) is added to form a composite of a coating layer precursor on a surface of the lithium composite oxide (Y), and then the composite is calcined for forming a coating layer containing M2 and M3 and for forming a solid solution of M2 included in the M2-M3 source inside the lithium composite oxide (Y) to synthesize the composite oxide (Z). Examples of the M2-M3 source may include $CaTiO_3$, $SrTiO_3$, $CaAl_2O_4$, $SrAl_2O_4$, $SrFe_{12}O_{19}$, $CaGeO_3$, $SrGeO_3$, $Ca_2SiO_4$, $Sr_2SiO_4$, $Ca_3SiO_5$, $Sr_3SiO_5$, $Ca_3Al_2O_6$, $Sr_3Al_2O_6$, $Ca_4Al_2Fe_2O_9$, and $Sr_4Al_2Fe_2O_9$.

A calcinating temperature in the step (2) is, for example, 500°C to 1200°C. Regulating the calcinating temperature may regulate a coating state of the surface of the coating layer in the lithium-transition metal composite oxide and the thickness of the coating layer.

[Negative Electrode]

The negative electrode 12 has, for example, a negative electrode current collector such as a metal foil and a negative electrode mixture layer provided on a surface of the negative electrode current collector. For the negative electrode current collector, a foil of a metal stable within a potential range of the negative electrode, such as copper, a film in which such a metal is disposed on a surface layer thereof, and the like may be used. The negative electrode mixture layer includes, for example, a negative electrode active material and a binder. The negative electrode may be produced by, for example, applying a negative electrode mixture slurry including the negative electrode active material, the binder, and the like on the negative electrode current collector and drying to form the negative electrode mixture layer, and subsequently rolling this negative electrode mixture layer.

The negative electrode mixture layer includes, for example, a carbon-based active material to reversibly occlude and release lithium ions, as the negative electrode active material. The carbon-based active material is preferably a graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material composed of at least one of Si and a Si-containing compound may also be used, and the carbon-based active material and the Si-based active material may be used in combination.

For the binder included in the negative electrode mixture layer, a fluororesin, PAN, a polyimide, an acrylic resin, a polyolefin, and the like may be used similar to that in the positive electrode, but styrene-butadiene rubber (SBR) is preferably used. The negative electrode mixture layer preferably further includes CMC or a salt thereof, polyacrylic acid (PAA) or a salt thereof, polyvinyl alcohol (PVA), and the like. In particular, SBR; and CMC or a salt thereof, or PAA or a salt thereof are preferably used in combination.

[Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene and polypropylene, cellulose, and the like are preferable. The separator 13 may have any of a single-layered structure and a multilayered structure. On a surface of the separator 13, a heat-resistant layer and the like may be formed.

EXAMPLES

Hereinafter, the present disclosure will be further described with Examples, but the present disclosure is not limited to these Examples.

<Example 1>

[Synthesis of Positive Electrode Active Material]

A nickel-manganese composite hydroxide with a composition of $Ni_{0.5}Mn_{1.5}(OH)_4$ obtained by coprecipitation was calcined at 500°C to obtain a nickel-manganese composite oxide (X).
Then, LiOH and the nickel-manganese composite oxide (X) were mixed so that a molar ratio between Li and a total amount of Ni and Mn was 1:2. This mixture was calcined at 900°C for 10 hours, and then crushed to obtain a lithium composite oxide (Y). XRD demonstrated that the lithium composite oxide (Y) had a spinel structure. ICP atomic emission spectroscopic analysis demonstrated that the lithium composite oxide (Y) had a composition of $LiNi_{0.5}Mn_{1.5}O_4$.
Then, the lithium composite oxide (Y) and CaTiOs were mixed so that a molar ratio between a total amount of Ni and Mn, and Ca was 1:0.02. This mixture was calcined at 1000°C for 10 hours, and then crushed to obtain a composite oxide (Z) having a coating layer on the surface. XRD demonstrated that the coating layer included CaTiOs. Observation of a cross section of the composite oxide (Z) with an electron probe micro analyzer (EPMA) demonstrated that Ti was distributed inside the lithium composite oxide (Y).

[Production of Positive Electrode]

The above positive electrode active material, acetylene black, and polyvinylidene fluoride (PVdF) were mixed at a solid-content mass ratio of 96.3:2.5:1.2, an appropriate amount of N-methyl-2-pyrrolidone (NMP) was added, and then the mixture was kneaded to prepare a positive electrode mixture slurry. This positive electrode mixture slurry was applied on a surface of a positive electrode current collector made of aluminum foil, the applied film was dried, and then rolled using a roller and cut to a predetermined electrode size to obtain a positive electrode in which the positive electrode mixture layer was formed on the surface of the positive electrode current collector.

[Preparation of Non-Aqueous Electrolyte]

Fluoroethylene carbonate (FEC), ethylene carbonate (EC), and ethyl methyl carbonate (EMC) were mixed at a volume ratio of 1:1:6 to obtain a non-aqueous solvent. Into the non-aqueous solvent, $LiPF_6$ was dissolved at a concentration of 1.0 mol/L to obtain a non-aqueous electrolyte.

[Production of Test Cell]

A lead wire was attached to each of the positive electrode and a counter electrode made of Li metal, and the positive electrode and the counter electrode were disposed opposite to each other with a separator made of polyolefin interposed therebetween to produce an electrode assembly. This electrode assembly and the above non-aqueous electrolyte were enclosed in an exterior housing body composed of an aluminum laminated film to produce a test cell.

[Evaluation of Rate Characteristics]

Under a temperature environment at 25°C, the above test cell was charged at a constant current of 0.2 C until a cell voltage reached 4.9 V vs Li, charged at a constant voltage of 4.9 V vs Li until a current value reached 0.05 C, and then the test cell was left to stand for 15 minutes. Thereafter, the test cell was discharged at a constant current of 0.2 C until the cell voltage reached 3.0 V vs Li (V0) to measure a discharge capacity at 0.2 C, C1. Next, the test cell was charged at a constant current of 0.5 C until the cell voltage reached 4.9 V vs Li, charged at a constant voltage of 4.9 V vs Li until the current value reached 0.02 C, and then the test cell was left to stand for 15 minutes. Thereafter, the test cell was discharged at a constant current of 1 C until the cell voltage reached 3.0 V vs Li (V0) to measure a discharge capacity at 1 C, C2. The rate characteristics were calculated with the following formula.

$$\text{Rate Characteristics } (\%) = C2/C1 \times 100$$

[Evaluation of Amount of Mn and Ca Eluted]

First, the following cycle test was performed on the above test cell. The negative electrode was taken from the test cell after the cycle test, a precipitate precipitated on the negative electrode was removed to evaluate the amounts of Mn and Ca eluted included in the precipitate with ICP atomic emission spectroscopic analysis.

<Cycle Test>

Under a temperature environment at 25°C, the test cell was charged at a constant current of 0.5 C until a cell voltage reached 4.9 V vs Li, charged at a constant voltage of 4.9 V vs Li until a current value reached 0.05 C, and then the test cell was left to stand for 15 minutes. Thereafter, the test cell was discharged at a constant current of 1.0 C until the cell voltage reached 3.0 V vs Li (V0). This charge-discharge cycle was repeated 20 times.

<Comparative Example 1>

A test cell was produced to perform the evaluation in the same manner as in Example 1 except that $Ca(OH)_2$, instead of $CaTiO_3$, was mixed with the lithium composite oxide (Y) in the synthesis of the positive electrode active material.

<Comparative Example 2>

A test cell was produced to perform the evaluation in the same manner as in Example 1 except that no calcination was performed in the synthesis of the positive electrode active material. As with the positive electrode active material of Example 1, a composite oxide (Z) having a coating layer on the surface was obtained, and XRD demonstrated that the coating layer included $CaTiO_3$. Meanwhile, observation of a cross section of the composite oxide (Z) with an electron probe micro analyzer (EPMA) demonstrated that Ti was not distributed inside the lithium composite oxide (Y) and Ti did not form a solid solution inside the lithium composite oxide (Y).

<Comparative Example 3>

A test cell was produced to perform the evaluation in the same manner as in Example 1 except that the lithium composite oxide (Y) was not mixed with $CaTiO_3$ in the synthesis of the positive electrode active material, and the lithium composite oxide (Y) was used as the positive electrode active material.

<Example 2>

A test cell was produced in the same manner as in Example 1 except that the lithium composite oxide (Y) and $SrTiO_3$ were mixed so that a molar ratio between a total amount of Ni and Mn, and Sr was 1:0.02 in the synthesis of the positive electrode active material. Evaluation was performed in the same manner as in Example 1 except that an amount of Sr eluted, instead of Ca, was measured by ICP atomic emission spectroscopic analysis in the evaluation of the amounts of Mn and Ca eluted. XRD demonstrated that the coating layer included $SrTiO_3$. Observation of a cross section of the composite oxide (Z) with an electron probe micro analyzer (EPMA) demonstrated that Ti was distributed inside the lithium composite oxide (Y).

<Comparative Example 4>

A test cell was produced to perform the evaluation in the same manner as in Example 2 except that $Sr(OH)_2$, instead of $SrTiO_3$, was mixed with the lithium composite oxide (Y) in the synthesis of the positive electrode active material.

<Comparative Example 5>

A test cell was produced to perform the evaluation in the same manner as in Example 1 except that no calcination was performed in the synthesis of the positive electrode active material. As with the positive electrode active material of Example 2, a composite oxide (Z) having a coating layer on the surface was obtained, and XRD demonstrated that the coating layer included $SrTiO_3$. Meanwhile, observation of a cross section of the composite oxide (Z) with an electron probe micro analyzer (EPMA) demonstrated that Ti was not distributed inside the lithium composite oxide (Y) and Ti did not form a solid solution inside the lithium composite oxide (Y).

<Comparative Example 6>

A test cell was produced to perform the evaluation in the same manner as in Example 2 except that the lithium composite oxide (Y) was not mixed with SrTiO$_3$ in the synthesis of the positive electrode active material, and the lithium composite oxide (Y) was used as the positive electrode active material.

Table 1 summarizes the results of the rate characteristics and amounts of Mn and Ca eluted of the test cells of Example 1 and Comparative Examples 1 to 3. The amounts of Mn eluted are shown as relative values of the results of Example 1 and Comparative Examples 1 and 2 relative to the result of Comparative Example 3 being 100. The amounts of Ca eluted were measured in only Example 1 and Comparative Example 1, and the result of Example 1 is shown as a relative value relative to the result of Comparative Example 1 being 100. Table 2 summarizes the results of the rate characteristics and amounts of Mn and Sr eluted of the test cells of Example 2 and Comparative Examples 4 to 6. The amounts of Mn eluted are shown as relative values of the results of Example 2 and Comparative Examples 4 and 5 relative to the result of Comparative Example 6 being 100. The amounts of Sr eluted were measured in only Example 2 and Comparative Example 4, and the result of Example 1 is shown as a relative value relative to the result of Comparative Example 4 being 100.

[Table 1]

|  | Rate characteristics (%) | Amount eluted | |
| --- | --- | --- | --- |
|  |  | Mn | Ca |
| Example 1 | 99.4 | 77 | 93 |
| Comparative Example 1 | 99.1 | 83 | 100 |
| Comparative Example 2 | 99.0 | 98 | N/A |
| Comparative Example 3 | 98.9 | 100 | N/A |

[Table 2]

|  | Rate characteristics (%) | Amount eluted | |
| --- | --- | --- | --- |
|  |  | Mn | Sr |
| Example 2 | 99.1 | 77 | 51 |
| Comparative Example 4 | 99.0 | 83 | 100 |
| Comparative Example 5 | 98.7 | 98 | N/A |
| Comparative Example 6 | 98.9 | 100 | N/A |

The test cell of Example 1 had a higher rate characteristic and a lower amount of Mn eluted than the test cells of Comparative Examples 1 to 3. In Example 1, which had the coating layer having the same composition as Comparative Example 2, the heat treatment formed the solid solution of Ti in the lithium-transition metal composite oxide to enable to reduce the amount of Mn eluted compared with Comparative Example 2. The test cell of Example 1 also had a lower amount of Ca eluted than the test cell of Comparative Example 1.

The test cell of Example 2 had a higher rate characteristic and a lower amount of Mn eluted than the test cells of Comparative Examples 4 to 6. In Example 2, which had the coating layer having the same composition as Comparative Example 5, the heat treatment formed the solid solution of Ti in the lithium-transition metal composite oxide to enable to reduce the amount of Mn eluted compared with Comparative Example 5. The test cell of Example 2 also had a lower amount of Sr eluted than the test cell of Comparative Example 4.

REFERENCE SINGS LIST

10 Secondary battery
11 Positive electrode
12 Negative electrode
12a Winding terminal end part
13 Separator
14 Electrode assembly
15 Exterior housing body
16 Sealing assembly
17, 18 Insulating plate
19 Positive electrode lead
20 Negative electrode lead
21 Grooved part
22 Filter
23 Lower vent member
24 Insulating member
25 Upper vent member
26 Cap
26a Opening
27 Gasket

**Claims**

1. A positive electrode active material for a non-aqueous electrolyte secondary battery, the positive electrode active material being represented by the general formula $Li_xM1_{2-y}M2_yM3_zO_wF_v$, wherein $1 \leq x \leq 1.2$, $0 < y < 1$, $0.001 \leq z < 0.1$, $0 \leq v \leq 0.2$, $3.8 \leq w+v \leq 4.2$, M1 represents one or more elements selected from the group consisting of Ni, Co, and Mn, M2 represents one or more elements selected from the group consisting of Ti, Fe, Al, Ge, and Si, and M3 represents one or more elements selected from the group consisting of Ca and Sr,
   wherein the positive electrode active material includes:

   a lithium-transition metal composite oxide containing the M1 and the M2; and
   a coating layer formed on at least a part of a surface of the lithium-transition metal composite oxide and containing the M2 and the M3.

2. The positive electrode active material for a non-aqueous electrolyte secondary battery according to claim 1, wherein the lithium-transition metal composite oxide contains the M2, and is represented by the general formula $Li_aNi_{0.5-b}Mn_{1.5-c}M2_{b+c}O_dF_e$, wherein $1 \leq a \leq 1.2$, $0 \leq b < 0.2$, $0 \leq c < 0.5$, $0 \leq e \leq 0.2$, and $3.8 \leq d+e \leq 4.2$.

3. The positive electrode active material for a non-aqueous electrolyte secondary battery according to claim 1 or 2, wherein the coating layer includes a compound represented by the general formula $M3_\alpha M2_{1-\alpha}O_\beta$, wherein $0 < \alpha < 1$ and $1 \leq \beta \leq 2$.

4. The positive electrode active material for a non-aqueous electrolyte secondary battery according to claim 1 or 2, wherein the coating layer includes one or more composite oxides selected from the group consisting of $CaTiO_3$, $SrTiO_3$, $CaAl_2O_4$, $SrAl_2O_4$, $SrFe_{12}O_{19}$, $CaGeO_3$, $SrGeO_3$, $Ca_2SiO_4$, $Sr_2SiO_4$, $Ca_3SiO_5$, $Sr_3SiO_5$, $Ca_3Al_2O_6$, $Sr_3Al_2O_6$, $Ca_4Al_2Fe_2O_9$, and $Sr_4Al_2Fe_2O_9$.

5. A non-aqueous electrolyte secondary battery, comprising:

   a positive electrode including the positive electrode active material for a non-aqueous electrolyte secondary battery according to any one of claims 1 to 4;
   a negative electrode; and
   a non-aqueous electrolyte.

# Figure 1

## INTERNATIONAL SEARCH REPORT

International application No.

**PCT/JP2021/015955**

**A.    CLASSIFICATION OF SUBJECT MATTER**

*C01G 45/00*(2006.01)i; *C01G 51/00*(2006.01)i; *C01G 53/00*(2006.01)i; *H01M 4/36*(2006.01)i; *H01M 4/505*(2010.01)i; *H01M 4/525*(2010.01)i

FI:    H01M4/505; H01M4/525; H01M4/36 C; C01G53/00 A; C01G51/00 A; C01G45/00

According to International Patent Classification (IPC) or to both national classification and IPC

**B.    FIELDS SEARCHED**

Minimum documentation searched (classification system followed by classification symbols)

H01M4/00-4/62; C01G45/00; C01G51/00; C01G53/00;

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | CN 105355878 A (ZHEJIANG MEIDARUI NEW MATERIAL TECHNOLOGY CO., LTD.) 24 February 2016 (2016-02-24) claims 1-10, paragraphs [0051]-[0057], [0079]-[0085], examples 4, 8 | 1-3, 5 |
| A | JP 2018-508114 A (LG CHEM, LTD.) 22 March 2018 (2018-03-22) | 1-5 |
| A | JP 2020-1985 A (TOYOTA INDUSTRIES CORP.) 09 January 2020 (2020-01-09) | 1-5 |
| A | JP 8-102332 A (HITACHI, LTD.) 16 April 1996 (1996-04-16) | 1-5 |
| A | US 2017/0229742 A1 (UNIV. NORTHWESTERN) 10 August 2017 (2017-08-10) | 1-5 |
| A | CN 108807977 A (XIAN CHUANGYU NEW MATERIAL TECH CO., LTD.) 13 November 2018 (2018-11-13) | 1-5 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **22 June 2021** | **06 July 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/015955**

| Patent document cited in search report | | | Publication date (day/month/year) | Patent family member(s) | | | Publication date (day/month/year) |
|---|---|---|---|---|---|---|---|
| CN | 105355878 | A | 24 February 2016 | (Family: none) | | | |
| JP | 2018-508114 | A | 22 March 2018 | US | 2018/0019474 | A1 | |
| | | | | WO | 2017/095061 | A1 | |
| | | | | KR | 10-2017-0063139 | A | |
| | | | | CN | 107408678 | A | |
| JP | 2020-1985 | A | 09 January 2020 | (Family: none) | | | |
| JP | 8-102332 | A | 16 April 1996 | (Family: none) | | | |
| US | 2017/0229742 | A1 | 10 August 2017 | (Family: none) | | | |
| CN | 108807977 | A | 13 November 2018 | (Family: none) | | | |

Form PCT/ISA/210 (patent family annex) (January 2015)

**EP 4 144 702 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012138197 A